# EUROPÄISCHE PATENTSCHRIFT

(11) **EP 2 633 252 B1**
(45) Veröffentlichungstag und Bekanntmachung des Hinweises auf die Patenterteilung: **18.01.2017**
(21) Anmeldenummer: 11757635.5
(22) Anmeldetag: 16.09.2011
(51) Int. Cl.: F26B 15/14, F26B 21/04, F26B 25/00, F26B 21/14, F26B 23/02

(54) **PROZESSKAMMER MIT VORRICHTUNG ZUM EINBLASEN VON GASFÖRMIGEM FLUID**
PROCESS CHAMBER WITH DEVICE FOR INJECTING GASEOUS FLUID
CHAMBRE DE TRAITEMENT COMPRENANT UN DISPOSITIF POUR INSUFFLER UN FLUIDE GAZEUX

(30) Priorität: 28.10.2010 DE 102010043087
(43) Veröffentlichungstag der Anmeldung: 04.09.2013
(60) Teilanmeldung: 16196596.7
(73) Patentinhaber: Dürr Systems AG, 74321 Bietigheim-Bissingen (DE)
(72) Erfinder: WIELAND, Dietmar, 71336 Waiblingen (DE); IGLAUER, Oliver, 70469 Stuttgart (DE); KNÜSEL, Christof, 80799 München (DE); WINKLER, Marius, 74385 Pleidelsheim (DE)
(74) Vertreter: Gauss, Nikolai
(86) Internationale Anmeldenummer: PCT/EP2011/066154
(87) Internationale Veröffentlichungsnummer: WO 2012/055634

(56) Entgegenhaltungen:
- WO-A1-2011/160778
- WO-A2-2010/122121
- DE-A1- 2 454 091
- DE-B- 1 095 497
- GB-A- 2 123 936
- US-A- 1 606 442

## Beschreibung

Die Erfindung betrifft eine Prozesskammer mit einem Innenraum, der einen tunnelförmig gestalteten, einen Boden und eine Decke aufweisenden Aufnahmebereich für Werkstücke umfasst, mit einer Öffnung für das Zu- oder Abführen von Werkstücken, und mit einer Vorrichtung für das Einblasen von gasförmigen Fluid in den Innenraum, die wenigstens eine schlitzförmige Düse oder Blende für das Erzeugen eines Fluidstromvorhangs zwischen der Öffnung und dem Aufnahmebereich für Werkstücke aufweist, wobei die schlitzförmige Düse oder Blende das gasförmige Fluid über die Decke des Innenraums mit einer in Bezug auf den Boden schrägen Strömungsrichtung entlang einer Leitkontur in den Innenraum zuführt.

Darüber hinaus betrifft die Erfindung auch ein Verfahren zum Betrieb der Prozesskammer, die einen Innenraum mit einem Aufnahmebereich für Werkstücke, mit einem Boden, mit einer Decke und mit einer Öffnung für das Zu- oder Abführen von Werkstücken hat, und die eine Vorrichtung für das Einblasen von gasförmigem Fluid in den Innenraum enthält, bei dem durch wenigstens eine schlitzförmige Düse oder Blende über die Decke gasförmiges Fluid eingeblasen wird, das einen zwischen der Öffnung und dem Aufnahmebereich für Werkstücke angeordneten Fluidstromvorhang erzeugt, wobei das gasförmige Fluid in den Innenraum mit einer von der Öffnung abgewandten zu dem Boden weisenden und in Bezug auf den Boden schrägen Strömungsrichtung zugeführt wird.

Eine derartige Prozesskammer und ein derartiges Verfahren ist aus der US 1,606,442 A bekannt.

Auch in der US 3,947,235 ist eine Prozesskammer und ein Verfahren für das Trocknen von frisch lackierten Kraftfahrzeugkarossen beschrieben, wobei ein Fluidstromvorhang zwischen Öffnungen für das Zu- und Abführen der Kraftfahrzeugkarossen in die Prozesskammer und einem Aufnahmebereich für die Kraftfahrzeugkarossen in der Prozesskammer erzeugt wird.

In Fertigungsstätten für das Lackieren und Beschichten von Fahrzeugkarossen werden für das Trocknen von frisch lackierten oder mit Korrosionsschutz beschichteten Fahrzeugkarossen Trocknungsanlagen eingesetzt. Diese Trocknungsanlagen haben eine als Trocknertunnel ausgebildete Prozesskammer, in die Heißluft eingeblasen wird. In dem Trocknertunnel gibt es eine Trocknungszone. Die Trocknungszone ist ein Aufnahmebereich für Werkstücke in Form von Fahrzeugkarossen. Um die Fahrzeugkarossen zu trocknen, werden diese auf einer Fördervorrichtung durch den Trocknertunnel bewegt.

Die zu trocknende Lackschicht oder Beschichtung der Fahrzeugkarossen kann durch Verunreinigungen, insbesondere Staubpartikel beeinträchtigt werden. Ferner kann durch eine Öffnung für das Zuführen von Werkstücken gasförmiges Fluid und mit diesem Wärme aus dem Innenraum entweichen.

Aufgabe der Erfindung ist es, eine Prozesskammer mit einem zumindest zeitweise geöffneten Innenraum bereitzustellen, bei der mit besonders einfachen Mitteln eine effiziente thermische Trennung dieses Innenraums von der Umgebung ermöglicht ist.

Diese Aufgabe wird durch eine Prozesskammer mit den Merkmalen des Anspruchs 1 und ein Verfahren zum Betrieb einer Prozesskammer mit den Merkmalen des Anspruchs 10 gelöst. Vorteilhafte Ausführungsformen der Erfindung sind in den abhängigen Ansprüchen angegeben.

Die erfindungsgemäße Prozesskammer enthält für das Einblasen von gasförmigem Fluid wenigstens eine Düse oder wenigstens eine Blende für das Erzeugen eines Fluidstromvorhangs zwischen der Öffnung und dem Aufnahmebereich für Werkstücke. Düse oder Blende dienen bevorzugt als Auslassöffnungen für über Umgebungstemperatur erwärmte und oder über Umgebungsdruck verdichtete Luft (oder ein entsprechend prozessiertes Inertgas wie CO₂ oder N₂). Insbesondere ist in der Prozesskammer ein gasförmiges Fluid enthalten, dem ein Temperaturniveau von mehr als 100°C bzw. eine Differenztemperatur zur Umgebung der Prozesskammer von mehr als 50°K zugeordnet ist. In einem Ausführungsbeispiel wird Fluid in etwa senkrecht von oben nach unten in die Prozesskammer eingeströmt. In einem weiteren bevorzugten Ausführungsbeispiel weist das durch die Düse einströmende Fluid eine um mehr als 20°K höhere oder niedrigere Temperatur als das in der Prozesskammer enthaltene (näherungsweise ruhende) Fluid auf. Im weiteren wird hauptsächlich auf eine starre oder verstellbare Düsengeometrie Bezug genommen, wobei die Erfindung jeweils auch mit einer oder mehreren einfachen Blenden realisierbar ist.

Der Aufnahmebereich für Werkstücke ist bevorzugt tunnelförmig gestaltet. Er weist einen Boden sowie eine Decke auf. Indem die wenigstens eine Düse als Schlitzdüse mit einem im wesentlichen rechteckigen Auslassquerschnitt ausgestaltet ist, kann das gasförmige Fluid über die Decke des Aufnahmebereichs mit einer in Bezug auf den Boden schrägen Strömungsrichtung derart zuführt werden, dass sich auf der zu der Eingangsöffnung weisenden Seite des Fluidstromvorhangs eine Strömungswalze aus Luft ausbildet, die wenigstens teilweise mit eingeblasenem Fluid vermischt ist.

Eine Idee der Erfindung ist insbesondere, dass sich der Fluidvorhang mit einem verringertem Energieaufwand erzeugen lässt, wenn das über die wenigstens eine Düse in den Innenraum eingeblasene gasförmige Fluid an einer Leitkontur geführt ist, die in den Innenraum ragt. Von Vorteil ist es insbesondere, wenn diese Leitkontur geschwenkt werden kann. Damit ist es möglich, den Fluidstromvorhang im Bezug auf die Horizontale einzustellen. Vorzugsweise wird ein Winkel zwischen 90° und 40° zwischen Ausströmrichtung und Horizontale eingestellt. Insbesondere kann durch das Verschwenken der Leitkontur erreicht werden, dass Werkstücke beim Eintritt in die Prozesskammer oder beim Austritt nicht beeinträchtigt werden.

Es ist insbesondere von Vorteil, wenn auf der zu der Öffnung weisenden Seite der Leitkontur eine Wandung angeordnet ist, die mit der Leitkontur eine Mischkammer definiert. Diese Mischkammer ist derart positioniert, dass Fluid auf einer zur Öffnung (d. h. vom Innenraum der Prozesskammer nach außen) weisenden Seite des Fluidvorhangs aus der ausgebildeten Strömungswalze mit Luft aus dem Bereich der Öffnung vermischt wird. Es wird hier von dem durch die Düse oder die Blende strömenden, gasförmigen Fluid in den Innenraum gesaugt.

Die Wandung kann eine oder mehrere Öffnungen für das Hindurchtreten von umgewälzter Luft aus dem Bereich der Öffnung aufweisen.

Indem auf einer der Mischkammer abgewandten Seite der Leitkontur eine als "Totraum" für gasförmiges Fluid wirkende Nebenkammer ausgebildet ist, lässt sich gewährleisten, dass der aus der Düse oder Blende austretende Strom aus gasförmigen Fluid entlang der Leitkontur ohne einen Strömungsabriss geführt ist. In dem "Totraum" herrschen bevorzugt niedrigere Strömungsgeschwindigkeiten als außerhalb des Totraums. Durch die Anordnung eines zusätzlichen Leitflügels in der Mischkammer lässt sich erreichen, dass große Mengen von Fluid aus der Strömungswalze in den Fluidvorhang zurückgeführt werden.

Indem auf der zu der Eingangsöffnung weisenden Seite des Leitflügels eine Stirnwandung angeordnet ist, die mit der Leitkontur einen Rückhalteraum definiert, kann umgewälzte Luft aus dem Bereich der Eingangsöffnung, die im Bereich des Leitflügels in einen Randbereich des Innenraums gelenkt wird, vor einem Austreten ins Freie zurückgehalten werden.

Die Stirnwandung hat günstigerweise eine oder mehrere Öffnungen für das Hindurchtreten von umgewälzter Luft aus dem Bereich der Eingangsöffnung. Die wenigstens eine Düse kann eine Einrichtung für das Einstellen der durch die Düse hindurchtretenden Strömungsmenge für Fluid aufweisen. Indem mehrere Düsen mit einer Einrichtung für das Einstellen der durch die Düse hindurchtretenden Strömungsmenge für Fluid vorgesehen sind, kann der Fluidstromvorhang zwischen der Eingangsöffnung und dem Aufnahmebereich für Werkstücke in verschiedenen Abschnitten unterschiedlich eingestellt werden.

Die Vorrichtung für das Einblasen von gasförmigen Fluid kann eine Heizeinrichtung für das Erwärmen des gasförmigen Fluids aufweisen. Hierdurch lässt sich erreichen, dass im Bereich von Öffnungen der Prozesskammer kein Kondensat, z.B. Kondenswasser entsteht. Die Prozesskammer eignet sich für den Einsatz in einer Trocknungs- und/oder Härtungsanlage. Insbesondere kann die Prozesskammer in eine Lackieranlage integriert werden.

In der Prozesskammer wird der Fluidvorhang mit gasförmigem Fluid erzeugt, das mit Druck beaufschlagt ist und durch eine Düse geführt wird. Dabei wird in der zu der Düse benachbart angeordneten Mischkammer Luft aus dem Bereich einer Öffnung der Prozesskammer dem aus der Düse strömenden gasförmigen Fluid beigemischt. Das durch die Düse geführte gasförmige Fluid wird an einer die Mischkammer begrenzenden Leitkontur entlang geführt. Diese Leitkontur trennt die Mischkammer von einer als Totraum für gasförmiges Fluid wirkenden hierzu benachbart angeordneten Nebenkammer.

Die Prozesskammer kann insbesondere in der Weise betrieben werden, dass ein durch eine Düse geführter Strom von gasförmigem Fluid für das Erzeugen eines Fluidstromvorhangs zwischen der Öffnung und dem Aufnahmebereich für Werkstücke gedrosselt oder unterbrochen wird und /oder bei dem die Richtung des Fluidstromvorhangs geändert wird, wenn ein Werkstück durch die Öffnung bewegt wird. Dies gewährleistet, dass der Fluidstromvorhang die Oberfläche der Beschichtung von Werkstücken, die in und aus der Prozesskammer bewegt werden, nicht beschädigt.

Im Folgenden wird die Erfindung anhand der in der Zeichnung in schematischer Weise dargestellten Ausführungsbeispiele näher erläutert.

Es zeigen:
- Fig. 1: eine Trocknungsanlage für Fahrzeugkarossen;
- Fig. 2: einen Längsschnitt einer Schleuse der Trocknungsanlage;
- Fig. 3: eine dreidimensionale Ansicht der Schleuse;
- Fig. 4: die Strömungsverhältnisse für Luft im Bereich der Schleuse;
- Fig. 5: einen Längsschnitt einer weiteren Schleuse für eine Trocknungsanlage;
- Fig. 6: und Fig. 7 sowie Fig. 8 Abschnitte weitere Längsschnitte alternativer Ausführungsformen für Schleusen in einer Trocknungsanlage;
- Fig. 9: einen Querschnitt eines Trocknertunnels in einer Trocknungsanlage; und
- Fig. 10: einen Längsschnitt einer weiteren Schleuse.

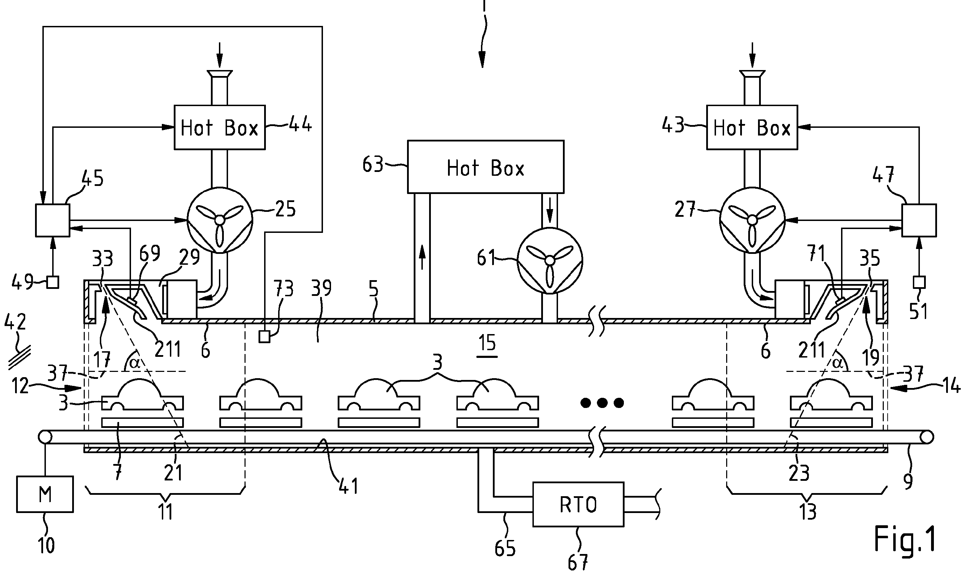

Die in Fig. 1 gezeigte Anlage 1 zum Trocknen von metallischen Werkstücken ist insbesondere für Fahrzeugkarossen 3 ausgelegt. Die Anlage 1 umfasst eine als Trocknertunnel 5 ausgebildete Prozesskammer. Durch den Trocknertunnel 5 können die Fahrzeugkarossen 3, die auf Skids 7 montiert sind, mittels einer Fördervorrichtung 9 bewegt werden. Die Fördervorrichtung hat einen elektrischen Antrieb 10. Der Trocknertunnel 5 ist mit Metallblech ausgekleidet. Er hat eine Eingangsschleuse 11 mit einer Öffnung 12 und eine Ausgangsschleuse 13 mit einer Öffnung 14. Der Trocknertunnel 5 umfasst einen Trocknungsabschnitt 15, der zwischen der Eingangsschleuse 11 und der Ausgangsschleuse 13 liegt. Der Trocknungsabschnitt 15 ist ein Aufnahmebereich für Werkstücke. Der Trocknungsabschnitt 15 ist bevorzugt so ausgelegt, dass darin etwa fünfzehn frisch mit einem Lack und/oder einem Lösemittel enthaltenden Substrat beschichtete Fahrzeugkarossen 3 mehr oder weniger gleichzeitig getrocknet werden können. Hierzu wird der Trocknungsabschnitt 15 z. B. mit der Länge L = 40 m, einer lichten Breite b mit 1,40 m < b < 1,60 m und einer lichten Höhe h mit 2,60 m < h < 2,00 m ausgelegt. Bei einem besonders bevorzugten Ausführungsbeispiel ergibt sich bei einem Taktabstand von 5,2 m, dreißig Einheiten pro Std. und 0,5 Std. Verweilzeit eine Tunnellänge von 78 m (Breite b außen: 3 m bis 4,6 m, Höhe h außen: 2,8 m bis 3,3 m). In dem Trocknungsabschnitt 15 wird mittels eines Ventilators 61 Luft zum Trocknen umgewälzt. Um die Luft zum Trocknen auf einer gleichbleibenden Temperatur zu halten, wird dabei die Luft durch eine Heizeinrichtung 63 geführt. Um aus der Gasatmosphäre in dem Trocknertunnel 5 das Lösemittel aus Lack oder Beschichtungen der Fahrzeugkarossen abzuführen, gibt es in der Anlage 1 eine Leitung 65 für Abluft, die mit Lösemittel belastete Luft aus dem Trocknertunnel 5 einem Reinigungsreaktor 67 zuführt.

In der Eingangsschleuse 11 und der Ausgangsschleuse 13 des Trocknertunnels 5 gibt es jeweils eine Düse 17, 19 für das Erzeugen eines Fluidstromvorhangs 21, 23. Die Düsen 17, 19 werden über einen als Verdichter wirkenden Ventilator für Frischluft 25, 27 durch eine über der Decke 6 des Trocknertunnels 5 angeordneten Kammer 29, 31 mit Frischluft versorgt. Die Düsen 17, 19 haben bevorzugt eine schmale schlitzförmige Öffnung 33, 35, welche sich im Wesentlichen über die Breite des Trocknertunnnels 5 erstreckt. Die schlitzförmige Öffnung 33, 35 der Düsen 17, 19 mündet in den Innenraum 39 des Trocknertunnels 5. Das aus den Düsen 17, 19 ausströmende Fluid ist an einem Leitblech mit einer Leitkontur 211 in den Innenraum des Trocknertunnels geführt. Für ein vorteilhaft mögliches Erfassen der Temperatur des dem Innenraum 39 über die Düsen 17, 19 zugeführten Fluids befindet sich an der Leitkontur 211 ein Temperatursensor 69, 71.

Der Fluidstromvorhang 21, 23 verläuft vorzugsweise jeweils unter einem Winkel von 40° ≤ a ≤ 60° gegenüber der Horizontalen 37. Er ist in den Innenraum 39 des Trocknertunnels 5 gerichtet. Der aus den Düsen 17, 19 strömende Fluidstrom weitet sich dabei zum Boden 41 des Trocknertunnels 5 hin auf. Mit zunehmendem Abstand von der Öffnung 33, 35 der Düsen 17, 19 nimmt die Geschwindigkeit der Strömung der den Fluidvorhang 21, 23 bildenden Frischluft als gasförmiges Fluid ab. Der Fluidstromvorhang 21, 23 trennt die Gasatmosphäre in dem Innenraum 39 des Trocknertunnels 5 von der Umgebungsluft 42.

Für das Erfassen der Konzentration von Lösemittel in der Gasatmosphäre des Trocknertunnels 5 ist in dem Trocknungsabschnitt 15 ein Lösemittelsensor 73 angeordnet. Das den Düsen 17, 19 zugeführte gasförmige Fluid in Form von Luft ist in einer Heizeinrichtung 43, 44 auf eine gewünschte Prozesstemperatur Tₛₒₗₗ vorgewärmt, die vorzugsweise in einem Temperaturbereich 200°C ≤ Tₛₒₗₗ ≤ 250°C liegt. Indem der Fluidstromvorhang 21, 23 aus Frischluft besteht, kann gewährleistet werden, dass eine untere Explosionsgrenze für organische Lösemittel in der Trocknungszone 15 des Trocknertunnels 5 nicht überschritten wird. Das Vorwärmen des zugeführten Fluids gewährleistet, dass in der Eingangsschleuse 11 und der Ausgangsschleuse 13 des Trocknertunnels 5 kein Kondensat entsteht.

Für das Einhalten einer Explosionsgrenze in der Trocknungszone 15 ist es insbesondere möglich, dass über die Düsen 17, 19 eine definierte Frischluftmenge bereitgestellt wird. Zum Einstellen der Menge der über die Düsen 17, 19 in den Trocknertunnel 5 zugeführten Frischluft gibt es in der Anlage zum Trocknen vorteilhafterweise eine Steuereinrichtung 45, 47. Mittels der Steuereinrichtung 45, 47 wird der aus den Düsen 17, 19 tretende Fluidstrom eingestellt. Das Einstellen des Fluidstroms erfolgt in Abhängigkeit der mittels eines Sensors 49, 51 erfassten Anzahl der durch die Trocknungszone 15 des Trocknertunnels bewegten Fahrzeugkarossen und aufgrund der Signale der Temperatursensoren 69, 71 und des Lösemittelsensors 73. Der Fluidstrom wird dabei so eingestellt, dass bei einem Betrieb der Anlage 1 die sogenannte untere Explosionsgrenze der Zusammensetzung der Gasatmosphäre in dem Trocknertunnel 5 nicht überschritten wird.

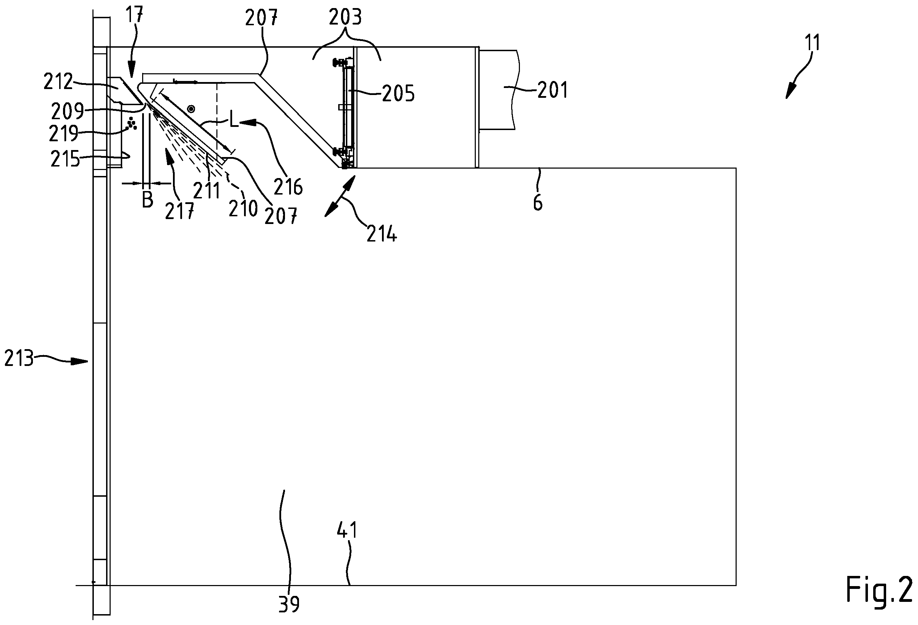

Die Fig. 2 ist eine Schnittansicht der Eingangsschleuse 11 der Trocknungsanlage 1 aus Fig. 1. Die Düse 17 in der Eingangsschleuse 11 ist eine Schlitzdüse. Der Düse 17 wird die in der Heizeinrichtung 44 erwärmte Frischluft über eine Rohrleitung 201 zugeführt. Die Rohrleitung 201 mündet in eine Kammer 203. In der Kammer 203 wird die Frischluft über Luftfilter 205 und ein schräg angeordnetes Leitblech 207 zu der Düse 17 geleitet. Das Leitblech 207 in der Schleuse 11 kann um eine Drehachse 208 in der Richtung des Pfeils 214 verschwenkt werden. Das Verschwenken des Leitblechs 207 öffnet einen Zugang zu dem Filter 205, damit dort Wartungsarbeiten durchgeführt werden können. Die Düse 17 hat eine schlitzförmige Öffnung 209. Die schlitzförmige Öffnung 209 der Düse 17 ist in Bezug auf die Decke 6 des Trocknertunnels 5 zurückgesetzt angeordnet. Dies ermöglicht, dass sich auch bei hohen Strömungsgeschwindigkeiten eines aus der Düse 17 austretenden Fluidstroms Beeinträchtigungen und Schäden einer noch nicht getrockneten Beschichtung von Fahrzeugkarossen vermeiden lassen, die durch die Eingangsschleuse 11 in den Trocknertunnel 5 bewegt werden. Wichtig für das Vermeiden von solchen Schäden ist ein vergleichsweise großer Abstand der Öffnung 209 der Düse 17 von dem Boden 41 des Trocknertunnels 5. Dies lässt sich durch eine zurückgesetzte Anordnung der Düse 17 in dem Trocknertunnel 5 erreichen. Das gewährleistet, dass der Impuls des aus der Düse 17 strömenden gasförmigen Fluids schon in der Mitte des Trocknertunnels so weit abgeschwächt ist, dass entsprechende Beschichtungen von Fahrzeugkarossen 3 durch den Fluidstromvorhang 21 keinen Schaden nehmen können.

Der aus der Öffnung 209 der Düse 17 austretende Fluidstrom 210 ist entlang der Kontur 211 eines als Leitflügel wirkenden Leitblechs in das Innere des Trocknertunnels 5 geführt. Die Länge L der Kontur 211 des Leitblechs 207 entspricht dem 20 bis 40-fachen der Schlitzweite B der Düsenöffnung 209.

Auf der zu der Eingangsöffnung 213 des Trocknertunnels 5 weisenden Seite der Kontur 211 gibt es eine Stirnwandung 215. Die Stirnwandung 215 erstreckt sich über die Breite der Schleuse 11. Die Stirnwandung 215 definiert mit der Kontur 211 und einem Firstelement 212 eine Mischkammer 217 für gasförmiges Fluid 219. Die Mischkammer 217 ist im Bezug auf die Decke 6 des Trocknertunnels 5 zurückgesetzt angeordnet. Die Mischkammer 217 befindet sich in der Schleuse 11 oberhalb der Eingangsöffnung 213. Die Mischkammer 217 ist der Eingangsöffnung 213 benachbart. Das Leitblech mit der Kontur 211 trennt die Mischkammer 217 von einer Nebenkammer 216. Die Nebenkammer 216 öffnet sich in das Innere 39 der Trocknertunnels 5. Die Nebenkammer 216 bildet eine Totraum für Luft aus dem Trocknertunnel 5. Die auf der Rückseite des Leitblechs mit der Leitkontur 211 ausgebildete Nebenkammer bewirkt, dass der Fluidstrom 210 an der Leitkontur 211 aufgrund des Coanda-Effekts ohne Strömungsabriss geführt ist.

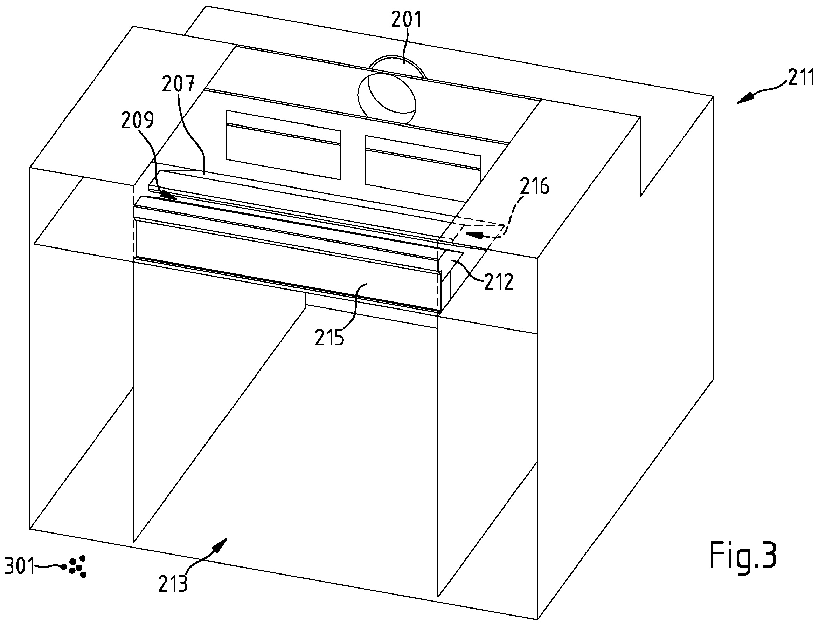

Die Fig. 3 ist eine dreidimensionale Ansicht der Eingangsschleuse 11 aus Fig. 2. Die schlitzförmige Öffnung 209 der Düse 17 erstreckt sich über die gesamte Breite der Eingangsöffnung 213 des Trocknertunnels 5. Die schlitzförmige Öffnung 209 der Düse 17 ist dabei so schmal, dass der aus der Düse 17 austretende Fluidstrom über einen weiten Strömungsbereich mit unterschiedlichen Austrittsgeschwindigkeiten einen Fluidstromvorhang bildet. Dieser Fluidstrom unterbindet insbesondere einen Eintrag von Schmutzpartikeln 301 aus der Umgebung der in der Fig. 1 gezeigten Trocknungsanlage 1 in das Innere des Trocknertunnels 5.

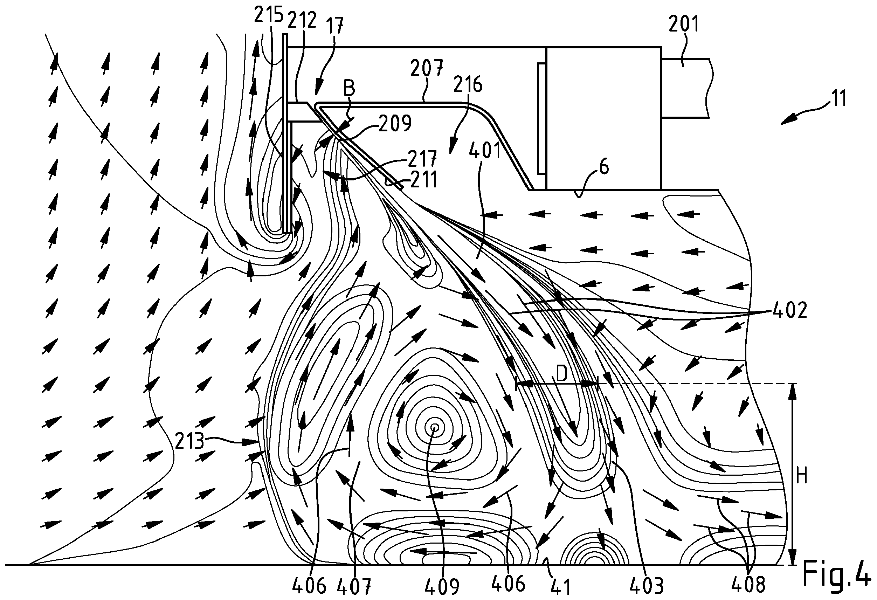

Die Fig. 4 zeigt mit Pfeilen die Strömungsverhältnisse für Luft in der Eingangsschleuse 11 in der Ebene eines Längsschnitts des Trocknertunnels 5 aus Fig. 1. Die dem Trocknertunnel 5 über die schlitzförmige Düse 17 zugeführte Frischluft bewirkt auf der Austrittsseite der Düse 17 einen Fluidstromvorhang 401. Ausgehend von der Öffnung 209 der Düse 17 erstreckt sich der Fluidstromvorhang 401 aus in Richtung der Pfeile 402 strömender Frischluft in der Form einer gebogenen Keule 403 zu dem Boden 41 der Eingangsschleuse 11. Die Keule 403 hat in der Höhe H der Mitte der Eingangsschleuse 11 eine Dicke D, die durch die Weite B der Öffnung 209 der Düse 17 bestimmt ist. Auf der zur Eingangsöffnung 213 des Trocknertunnels 5 weisenden Seite des Fluidstromvorhangs 401 erzeugt die aus der Düse 17 strömende Frischluft eine Strömungswalze 407 aus Luft. In der Strömungswalze 407 strömt die Luft mit einer durch die Pfeile 406 kenntlich gemachten Strömungsrichtung um ein Zentrum 409. Die Luft im Bereich des Zentrums 409 ist im Wesentlichen unbewegt. Die in der Strömungswalze 407 umgewälzte Luft ist wenigstens teilweise mit der über die Düse 17 eingeblasenen Frischluft vermischt. Die Strömungswalze 407 erstreckt sich von dem Boden 41 bis zu der Decke 6 der Eingangsschleuse 11.

Der von dem Stirnblech 215 auf der zu der Eingangsöffnung 213 weisenden Seite des Leitblechs 211 und dem Leitblech 211 sowie dem Firstelement 212 definierte Mischkammer 217 nimmt dabei einen kleinen Teil der in der Strömungswalze 407 umgewälzten Luft auf. In der Mischkammer 217 wird diese Luft zu einem großen Teil von dem aus der Öffnung 209 der Düse 17 strömenden gasförmigen Fluid mitgerissen und beigemengt. Dies erhöht den Volumenstrom des Fluidvorhangs 401 im Bereich der Pfeile 402. Der Volumenstrom des Fluidstromvorhangs 401 kann so zu 30% oder auch mehr aus gasförmigem Fluid bestehen, die dem Fluidstrom aus der Düse 17 über die Mischkammer 217 zugeführt wird. Das hat zur Folge, dass auch mit einer vergleichsweise geringen Menge an eingeblasener Frischluft ein sich bis zu dem Boden 41 des Trocknertunnels 5 erstreckender Fluidstromvorhang 401 erzeugt werden kann.

Die Luft aus der Mischkammer 217 wird auf diese Weise wieder der Strömungswalze 407 zugeführt. Dieser Prozess hat zur Folge, dass nur ein geringer Anteil des über die Düse 17 in den Innenraum 39 des Trocknertunnels 5 zugeführten gasförmigen Fluids durch die Öffnung 213 der Schleuse 11 des Trocknertunnels 5 wieder verlässt. Das aus der Düse 17 strömende gasförmige Fluid gelangt damit zum größten Teil entsprechend der Richtung der Pfeile 408 in das Innere des Trocknertunnels 5. Mittels des aus der Düse 17 strömenden gasförmigen Fluids wird im Bereich der Öffnung 213 der Schleuse 11 eine Barriere mit in der Strömungswalze 407 umgewälzter Luft erzeugt. Diese Barriere bewirkt eine thermische Trennung des Innenraums 39 des Trocknertunnels 5 von dem Außenbereich. Darüber hinaus unterbindet diese Barriere auch den Eintrag von Staub und Schmutzpartikeln in den Innenraum 39 des Trocknertunnels 5.

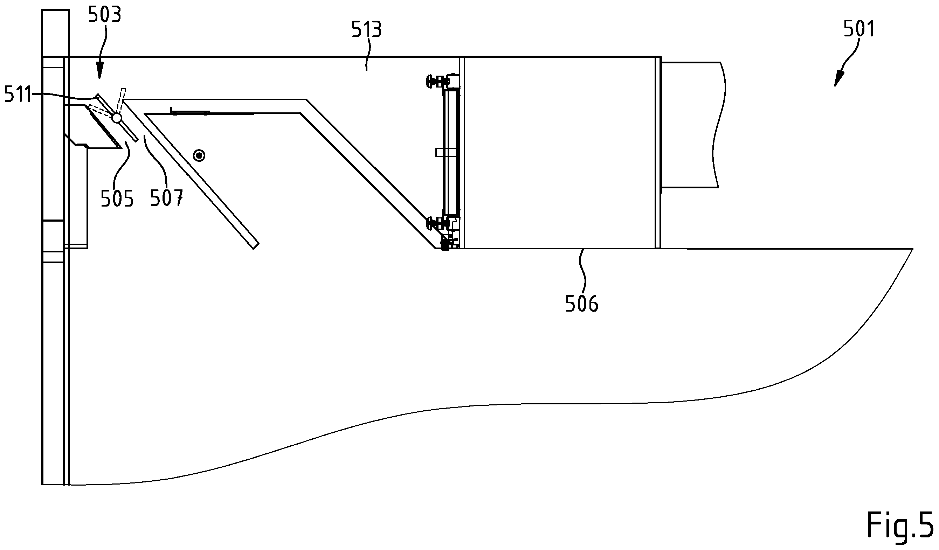

Die Fig. 5 zeigt eine abgewandelte Ausführungsform einer Schleuse 501 für eine Trocknungsanlage. Die Schleuse 501 hat eine Düse 503 für das Zuführen von Frischluft mit einer im Vergleich zu der Schleuse 11 aus Fig. 1 modifizierten Düsengeometrie. Die Düse 503 ist eine Doppelkammerdüse. Die Düse 503 hat eine schlitzförmige Düsenöffnung 505 und eine schlitzförmige Düsenöffnung 507, die sich jeweils über die gesamte Breite der Decke 509 der Eingangsschleuse 501 erstreckt. Die Düse 503 umfasst eine schwenkbare Steuerklappe 511. Die Steuerklappe 511 ist mittels eines nicht weiter gezeigten Spindelantriebs bewegbar. Für das Bewegen der Steuerklappe eignet sich aber auch ein Verstellmechanismus mit Welle oder auch ein Seilzug. Durch Schwenken der Steuerklappe 511 kann die der Düse 503 über die Kammer 513 zugeführte Frischluft wahlweise durch die Düsenöffnung 507, die Düsenöffnung 509 oder durch die Düsenöffnungen 507, 509 gleichzeitig geleitet werden. Dies ermöglicht es, den aus den Düsenöffnungen 507, 509 austretenden Luftstrom zu dosieren. Beispielsweise ist es mittels der Steuerklappe 511 möglich, den Luftstrom aus der Düse 503 entsprechend der Position von Fahrzeugkarossen im Bereich der Eingangsöffnung eines Trocknertunnels zu variieren. Mit dieser Maßnahme lässt sich erreichen, dass eine auf einer Fahrzeugkarosse aufgebrachte Lackschicht nicht durch den mit Frischluft aus der Düse 503 gebildeten Fluidstrom beeinträchtigt wird. Außerdem kann mit der Steuerklappe 511 die Dicke D des Fluidstromvorhangs und damit die Menge und/oder die Geschwindigkeit der in das Innere des Trocknertunnels zugeführten Frischluft eingestellt werden.

Bei einer modifizierten Ausgestaltung der Eingangsschleuse 501 kann auch eine Düse mit mehreren Düsenöffnungen und mit mehreren Steuerklappen vorgesehen werden, um einen Frischluftstrom für einen Trocknertunnel einzustellen.

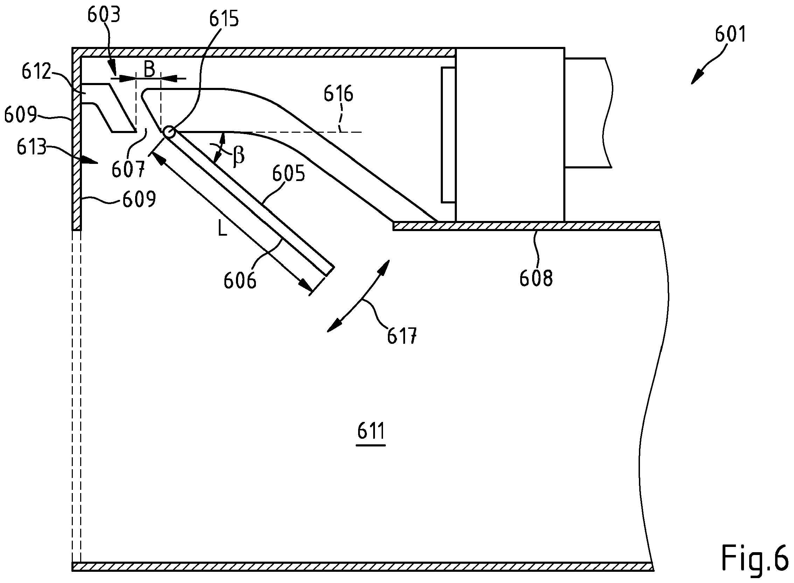

Die Fig. 6 zeigt einen Abschnitt einer alternativen Ausführungsform für eine Schleuse 601 mit einer Düse 603, um in dem Eingangs- oder Ausgangsbereich einer Trocknungsanlage einen Luftvorhang auszubilden.

Der Düse 603 in der Schleuse 601 ist ein als Leitflügel wirkendes, bevorzugt schwenkbar angeordnetes Leitblech 605 zugeordnet. Das Leitblech weist optional eine zumindest abschnittsweise gekrümmte Außenkontur auf. Insbesondere erstreckt es sich über die gesamte Breite der Düse 603. Das schwenkbare Leitblech 605 bei der Öffnung 607 der Düse 603 ist an der Decke 608 der Schleuse 601 an einem Drehgelenk 615 schwenkbar gelagert. Das schwenkbare Leitblech 605 ragt in das Innere 611 der Schleuse 601. Die Länge L der Kontur des Leitblechs 605 entspricht etwa dem 20- bis 40-fachen der Schlitzweite B der Düsenöffnung. Dem schwenkbaren Leitblech 605 gegenüberliegend ist in der Schleuse 601 wiederum eine Stirnwandung 609 angeordnet. Das schwenkbare Leitblech 605 und die Stirnwandung 609 definieren zusammen mit einem Firstelement 612 auch hier eine Mischkammer 613. Aufgrund der Schwenkbarkeit des Leitblechs 605 kann die Geometrie der Mischkammer 613 bei der Schleuse 601 verändert werden.

Für das Verschwenken ist dem Leitblech 605 ein nicht weiter dargestellter Stellantrieb zugeordnet. Durch das Verschwenken des Leitblechs 605 entsprechend dem Doppelpfeil 617 ist es möglich, einen Anstellwinkel β im Bezug auf die Horizontale 616 und damit die Richtung eines mit gasförmigem Fluid aus der Düse 603 erzeugten Fluidstromvorhangs in der Schleuse 601 einzustellen. Durch Verschwenken wird die Kontur des von dem Leitblech 605 gebildeten Leitflügel verlagert, an dem das aus der Düse 607 strömende gasförmige Fluid geführt ist. Hierdurch kann die Form der Strömungswalze verändert werden, die aufgrund des aus der Düse 603 ausströmenden Fluids auf der zu der Öffnung 619 weisenden Seite des Leitblechs 605 ausgebildet wird. Indem das Leitblech 605 zu der Decke 608 der Schleuse 601 geschwenkt wird, lässt sich ein vergleichsweise flaches Einströmen von gasförmigem Fluid in die Schleuse bewirken. Durch das Auf- und Abbewegen des Leitblechs 605 kann die Strömungsrichtung des aus der Düse strömende Fluids an die Position und Geometrie von Fahrzeugkarossen angepasst werden, die durch die Schleuse 601 in das Innere des Trocknertunnels bewegt werden. So lässt sich erreichen, dass eine auf Fahrzeugkarossen aufgetragene Lackschicht, die in dem Trocknertunnel getrocknet werden soll, nicht verblasen wird und in dem Trocknertunnel keinen Schaden nimmt.

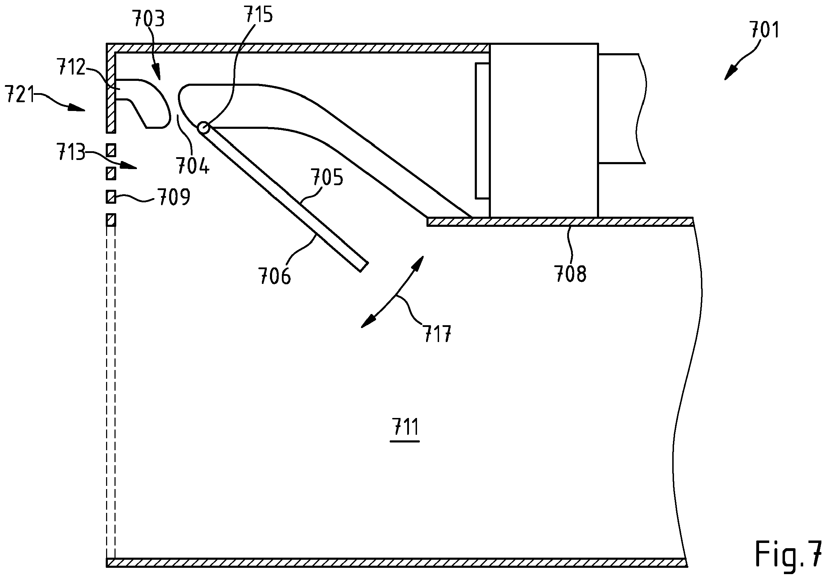

Die Fig. 7 zeigt einen Abschnitt einer weiteren alternativen Ausführungsform für eine Schleuse 701 mit einer Düse 703, um in dem Eingangs- oder Ausgangsbereich einer Trocknungsanlage einen Luftvorhang auszubilden. Die Düse 703 weist einen Diffusor auf, der sich an den verengten Querschnitt der Düse anschließt und so den Strömungsquerschnitt für das Fluid erweitert. Die Düse 703 mit anschließendem Diffusor weist also einen Strömungskanal 704 auf, dessen Querschnitt sich zum Inneren 711 der Schleuse 701 hin erweitert. Der Aufbau der Schleuse 701 entspricht im Übrigen demjenigen der Schleuse 601 aus Fig. 6. Einander entsprechende Baugruppen der Schleuse 601 und 701 sind daher in Fig. 7 mit im Vergleich zu Fig. 6 um die Zahl 100 erhöhten Bezugszeichen kenntlich gemacht. Anders als die Stirnwandung 609 der Schleuse 601 in Fig. 6 hat die Schleuse 701 eine Stirnwandung 709 mit einer oder mehreren Einlassöffnungen für Umgebungsluft. Bevorzugt weist die Stirnwandung 709 Öffnungen in Form einer siebartigen Perforierung auf. Diese Maßnahme ermöglicht ebenfalls das Ansaugen von Luft aus einem oberen Bereich 721 der Umgebung der Schleuse 701. Die solchermaßen in die Schleuse 701 angesaugte Luft wird bevorzugt mit Luft aus einer Strömungswalze vermischt, die sich an der Öffnung der Schleuse bildet. Nachfolgend werden die angesaugte Luft und ein Teil der Luft aus der Strömungswalze in die aus dem Diffusor austretende Fluidströmung zugemischt.

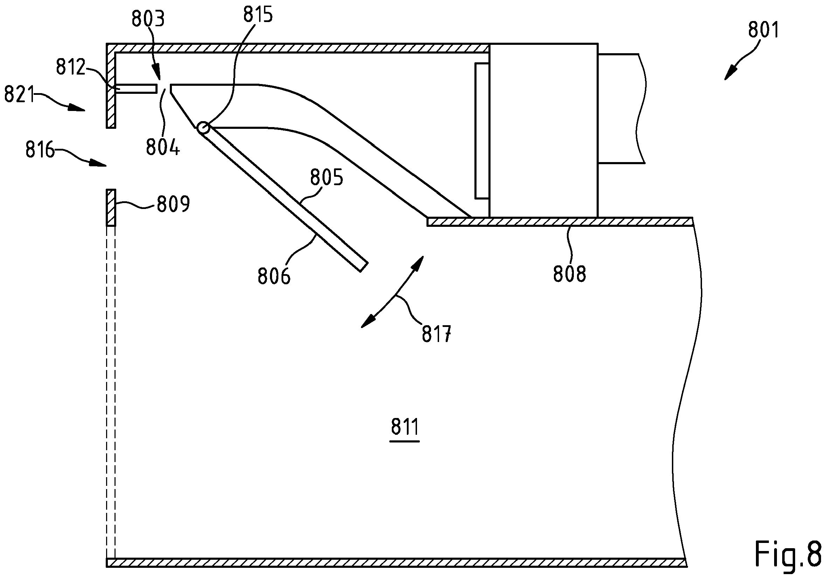

Die Fig. 8 zeigt einen Abschnitt einer weiteren alternativen Ausführungsform für eine Schleuse 801 mit einer eine Öffnung 804 aufweisende Blende 803, um in dem Eingangs- oder Ausgangsbereich einer Trocknungsanlage einen Luftvorhang auszubilden. Der Aufbau der Schleuse 801 entspricht demjenigen der Schleuse 701 aus Fig. 7. Einander entsprechende Baugruppen der Schleuse 701 und 801 sind daher in Fig. 8 mit im Vergleich zu Fig. 7 um die Zahl 100 erhöhten Bezugszeichen kenntlich gemacht. Anders als die Stirnwandung 709 der Schleuse 701 in Fig. 7 ist die Stirnwandung 809 der Schleuse 801 mit einer Ausnehmung 816 ausgeführt. Diese Maßnahme ermöglicht ebenfalls das Aufnehmen von Luft aus einem oberen Bereich 821 der Umgebung der Schleuse 801 in die mittels der Blende 803 erzeugte Strömungswalze an der Öffnung der Schleuse.

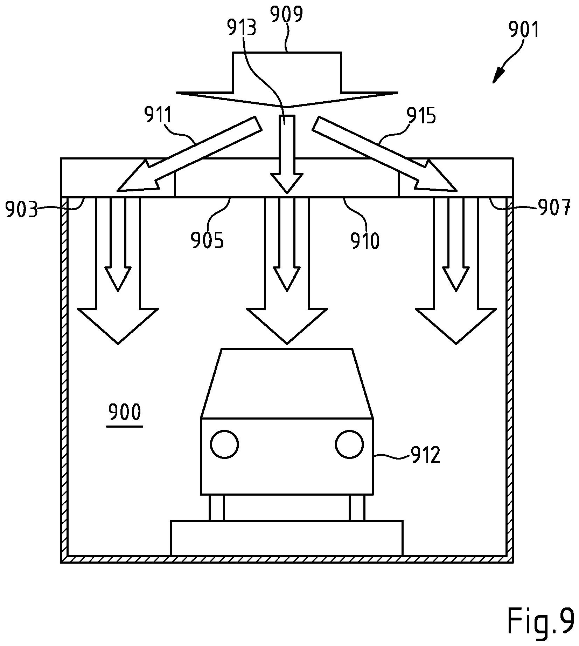

Die Fig. 9 zeigt einen Querschnitt einer Ein- oder Ausgangsschleuse 901 eines Trocknertunnels 900 in einer Trocknungsanlage mit einer Fahrzeugkarosse 912. Die Schleuse 901 hat schlitzförmige Düsen 903, 905, 907, die sich an der Decke 910 der Schleuse 901 befinden. Die Düsen 903, 905, 907 können über eine nicht weiter dargestellte Vorrichtung für das Zuführen von Frischluft mit einem Frischluftstrom 909 beaufschlagt werden. In der Schleuse 901 gibt es Steuerklappen, mittels derer der Frischluftstrom 909 auf unterschiedliche Kanäle 911, 913 und 915 für das getrennte Beaufschlagen der Düsen 903, 905 und 907 mit Frischluft aufgeteilt werden kann.

Diese Maßnahme ermöglicht das Einstellen eines Fluidstromvorhangs 917 an den Öffnungen eines Trocknertunnels, der entsprechend dem Durchtritt von Werkstücken, z.B. Fahrzeugkarossen über die Breite B der Öffnung unterschiedlich eingestellt werden kann.

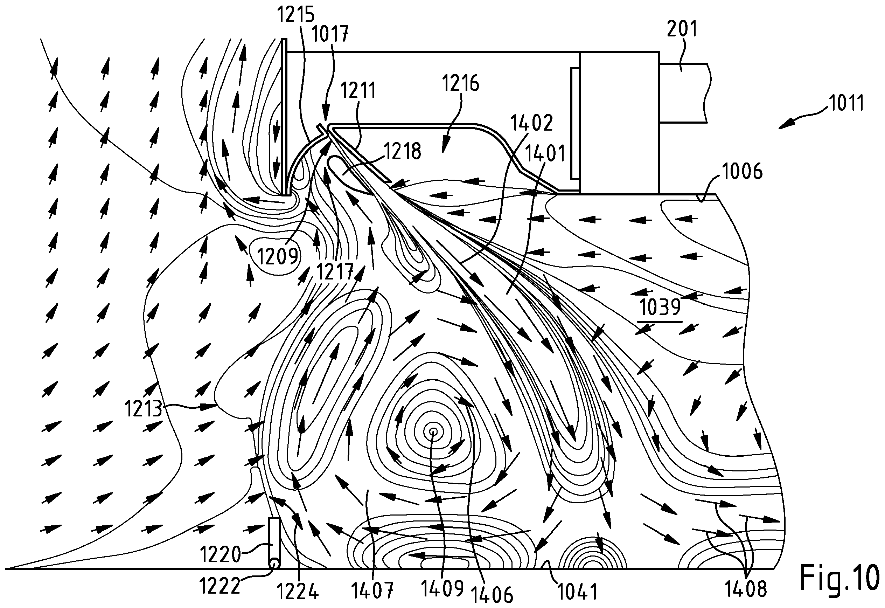

Die Fig. 10 zeigt einen Längsschnitt einer weiteren Schleuse 1011 für einen Trocknertunnel in einer Anlage zum Trocknen von metallischen Werkstücken. Entsprechend der Fig. 4 sind auch hier die Strömungsverhältnisse für Luft in der Schleuse 1011 mit Pfeilen angedeutet. Die dem Trocknertunnel über die schlitzförmige Düse 1017 zugeführte Frischluft bewirkt auf der Austrittsseite der Düse 1017 einen Fluidstromvorhang 1401. Unter dem Terminus "Frischluft" kann insbesondere vorverdichtete, erhitzte und/oder gereinigte und/oder getrocknete Luft verstanden werden, deren Zustandsparameter optimal eingestellt sind.

Ausgehend von einer Öffnung 1209 der Düse 1017 erstreckt sich der Fluidstromvorhang 1401 (aus in Richtung der Pfeile 1402 strömender Frischluft) in der Form einer mehr oder weniger gebogenen Keule 1403 in Richtung eines Bodens 1041 der Schleuse 1011. Auf einer zur Eingangsöffnung 1213 der Schleuse 1011 weisenden Seite des Fluidstromvorhangs 1401 erzeugt die aus der Düse 1017 strömende Frischluft eine Strömungswalze 1407 aus Luft. In der Strömungswalze 1407 strömt die Luft mit einer durch die Pfeile 1406 kenntlich gemachten Strömungsrichtung um ein Zentrum 1409. Die Luft im Bereich des Zentrums 1409 ist im Wesentlichen unbewegt. Die in der Strömungswalze 1407 umgewälzte Luft ist wenigstens teilweise mit der über die Düse 1017 eingeblasenen Frischluft vermischt. Die Strömungswalze 1407 erstreckt sich von dem Boden 1041 bis zu der Decke 1006 der Eingangsschleuse 1011.

Die Schleuse 1011 hat auf der zu der Eingangsöffnung 1213 weisenden Seite eines sich an die Öffnung 1009 der Düse 1017 anschließenden eine Leitkontur aufweisenden Leitblechs 1211 eine bogenförmige Firstwandung 1215. Das Leitblech 1211 und die Firstwandung 1215 begrenzen und umschließen abschnittsweise eine nach unten offene Mischkammer 1217. In der Mischkammer 1217 ist bei dem Ausführungsbeispiel nach Fig. 10 ein Strömungsleitelement 1218 in Form eines "Strömungsflügels" positioniert, das sich wie die Öffnung 1009 der Düse 1017 bevorzugt über die gesamte Breite der Schleuse 1011 erstreckt. Das Leitblech 1211 trennt die Mischkammer 1217 von einer Nebenkammer 1216. Die Nebenkammer 1216 wirkt als Totraum für Luft, in dem niedrigere Strömungsgeschwindigkeiten als in der restlichen Schleuse vorliegen (ausgenommen das eigentlich zu vernachlässigende Rotationszentrum 1409 der Strömungswalze).

An dem Boden 1041 der Schleuse 1011 ist in dem Bereich der Öffnung 1213 eine Silhouettenwandung 1220 angeordnet. Die Silhouettenwandung 1220 dient insbesondere als eine Strömungsbarriere bzw. als bodenseitiges Strömungsleitelement. Die Silhouettenwandung 1220 besteht vorzugsweise aus einem Federstahl oder anderen temperatur- und/oder korrosionsbeständigen Stählen. Die Silhouettenwandung 1220 kann um eine (horizontale) Achse 1222 entsprechend dem Pfeil 1224 verschwenkt bzw. abgeklappt werden.

Die Mischkammer 1217 nimmt dabei erfindungsgemäß einen kleinen Teil der in der Strömungswalze 1407 umgewälzten Luft auf. In der Mischkammer 1217 wird diese Luft mit dem Strömungsflügel 1218 zu dem aus der Öffnung 1209 der Düse 17 strömenden gasförmigen Fluid gelenkt. Es wird von dem gasförmigen Fluid mitgerissen. Dies erhöht den Volumenstrom des Fluidvorhangs 1401 im Bereich der Pfeile 1402. Der Volumenstrom des Fluidstromvorhangs 1401 kann so zu einem großen Teil aus gasförmigem Fluid bestehen, die dem Fluidstrom aus der Düse 1017 über die Mischkammer 1217 zugeführt wird. Das hat zur Folge, dass auch mit einer vergleichsweise geringen Menge an eingeblasener Frischluft ein sich bis zu den Boden 1041 des Trocknertunnels erstreckender Fluidstromvorhang 1401 erzeugt werden kann.

Die Luft aus der Mischkammer 1217 wird auf diese Weise wieder der Strömungswalze 1407 zugeführt. Dieser Prozess hat zur Folge, dass nur ein geringer Anteil des über die Düse 1017 in den Innenraum 1039 des Trocknertunnels zugeführten gasförmigen Fluids durch die Öffnung 1213 der Schleuse 1011 des Trocknertunnels wieder verlässt. Das aus der Düse 1017 strömende gasförmige Fluid gelangt damit zum größten Teil entsprechend der Richtung der Pfeile 1408 in das Innere des Trocknertunnels. Mittels des aus der Düse 1017 strömenden gasförmigen Fluids wird im Bereich der Öffnung 1213 der Schleuse 1011 eine Barriere mit in der Strömungswalze 1407 umgewälzter Luft erzeugt, die den Innenraum 1039 des Trocknertunnels von dem Außenbereich thermisch trennt und darüber hinaus auch einen Eintrag von Staub und Schmutzpartikeln in den Trocknertunnel unterbindet. Die Silhouettenwandung 1220 an dem Boden 1041 der Schleuse 1011 bewirkt, dass die Strömungswalze 1407 vergleichsweise schmal ist. Nur wenn ein Werkstück in den Trocknertunnel bewegt wird, wird die Silhouettenwandung entsprechend dem Pfeil 1220 kurzzeitig in Richtung des Bodens 1041 geklappt.

Zusammenfassend sind folgende bevorzugte Merkmale der Erfindung festzuhalten: Eine Prozesskammer 5 hat einen Innenraum 39. In dem Innenraum 39 gibt es einen Aufnahmebereich 15 für Werkstücke 3, wobei der Innenraum 39 eine gegenüber der Umgebung der Prozesskammer erhöhte oder reduzierte Temperatur aufweist. Die Prozesskammer hat eine wenigstens zeitweise zur Umgebung geöffnete Öffnung 12, 14 für das Zu- oder Abführen von Werkstücken 3. Die Prozesskammer umfasst eine Vorrichtung 17, 19, 25, 29, 33, 37, 35 für das Einblasen von gasförmigem Fluid in den Innenraum 39. Die Vorrichtung für das Einblasen von gasförmigem Fluid weist wenigstens eine Düse 17, 19 für das Erzeugen eines Fluidstromvorhangs 21, 23 zwischen der Öffnung 12, 14 und dem Aufnahmebereich 15 für Werkstücke 3 auf. Das zugeführte gasförmige Fluid ist hinsichtlich seiner physikalischen und/oder chemischen Parameter konditioniert und weist insbesondere gegenüber dem Innenraum der Prozesskammer und/oder gegenüber der Umgebung der Prozesskammer unterschiedliche Temperatur auf.

## Patentansprüche

1. Prozesskammer (5) mit einem Innenraum (39), der einen tunnelförmig gestalteten, einen Boden (41) und eine Decke (6) aufweisenden Aufnahmebereich (15) für Werkstücke (3) umfasst, mit einer Öffnung (12, 14) für das Zu- oder Abführen von Werkstücken (3), und mit einer Vorrichtung (17, 19, 25, 29, 33, 37, 35) für das Einblasen von gasförmigem Fluid in den Innenraum (39), die wenigstens eine schlitzförmige Düse (17, 19) oder Blende (803) für das Erzeugen eines Fluidstromvorhangs (21, 23) zwischen der Öffnung (12, 14) und dem Aufnahmebereich (15) für Werkstücke (3) aufweist, wobei die schlitzförmige Düse (17, 19) oder Blende (803) das gasförmige Fluid über die Decke (6) des Innenraums (39) mit einer in Bezug auf den Boden (41) schrägen Strömungsrichtung (402) entlang einer Leitkontur (211) in den Innenraum (39) zuführt,
**dadurch gekennzeichnet, dass**
die Leitkontur (211) mit einer auf einer zu der Öffnung (12, 14) weisenden Seite der Leitkontur (211) angeordneten Wandung (215) einer Eingangsschleuse (11) oder Ausgangsschleuse (13) eine oberhalb der Öffnung (12, 14) in Bezug auf die Decke (6) nach oben zurückgesetzt angeordnete Mischkammer (217) begrenzt, aus der von dem durch die schlitzförmige Düse (17, 19) oder die Blende (803) in den Innenraum (39) zugeführten gasförmigem Fluid aus dem Bereich der Öffnung (12,14) herrührende Luft mitgerissen und in den Innenraum (39) gesaugt wird.

2. Prozesskammer nach Anspruch 1, **dadurch gekennzeichnet, dass** die Leitkontur (606) an einem schwenkbaren Leitflügen (605) ausgebildet ist.

3. Prozesskammer nach Anspruch 1 oder 2, **dadurch gekennzeichnet, dass** die Wandung (709, 809) eine oder mehrere Öffnungen (816) für das Hindurchtreten von umgewälzter Luft aus dem Bereich der Öffnung (12) hat.

4. Prozesskammer nach einem der Ansprüche 1 bis 3, **dadurch gekennzeichnet, dass** auf einer der Mischkammer (217) abgewandten Seite der Leitkontur (211) eine als Totraum für gasförmiges Fluid wirkende Nebenkammer (216) ausgebildet ist.

5. Prozesskammer nach einem der Ansprüche 1 bis 4, **dadurch gekennzeichnet, dass** in der Mischkammer (1217) ein Leitflügel (1218) angeordnet ist.

6. Prozesskammer nach einem der Ansprüche 1 bis 5, **dadurch gekennzeichnet, dass** die wenigstens eine Düse (503) eine Einrichtung (511) für das Einstellen der durch die Düse (503) hindurchtretenden Strömungsmenge für Fluid aufweist und/oder dass mehrere Düsen (903, 905, 907) mit einer Einrichtung für das Einstellen der durch die Düse hindurchtretenden Strömungsmenge für Fluid vorgesehen sind, um den Fluidstromvorhang zwischen der Eingangsöffnung und dem Aufnahmebereich für Werkstücke (912) in verschiedenen Abschnitten unterschiedlich einzustellen.

7. Prozesskammer nach einem der Ansprüche 1 bis 6, **dadurch gekennzeichnet, dass** für das Steuern einer in dem Innenraum (1039) ausgebildeten Fluidströmung eine schwenkbare Strömungsbarriere (1220) vorgesehen ist.

8. Prozesskammer nach einem der Ansprüche 1 bis 7, **dadurch gekennzeichnet, dass** die Vorrichtung für das Einblasen von gasförmigen Fluid eine Heizeinrichtung (43, 44) für das Erwärmen des gasförmigen Fluids aufweist.

9. Trocknungs- und/oder Härtungsanlage und/oder Lackieranlage mit einer gemäß einer der Ansprüche 1 bis 8 ausgebildeten Prozesskammer (5).

10. Verfahren zum Betrieb einer Prozesskammer (5), die einen Innenraum (39) mit einem tunnelförmigen Aufnahmebereich (15) für Werkstücke (3), mit einem Boden (41), mit einer Decke (6) und mit einer Öffnung (12, 14) für das Zu- oder Abführen von Werkstücken (3) hat, und die eine Vorrichtung (17, 19, 25, 29, 33, 37, 35) für das Einblasen von gasförmigem Fluid in den Innenraum (39) enthält, bei dem durch wenigstens eine schlitzförmige Düse (17, 19) oder Blende (803) über die Decke (6) gasförmiges Fluid eingeblasen wird, das einen zwischen der Öffnung (12, 14) und dem Aufnahmebereich (15) für Werkstücke (3) angeordneten Fluidstromvorhang (21, 23) erzeugt, wobei das gasförmige Fluid in den Innenraum (39) mit einer von der Öffnung (12, 14) abgewandten zu dem Boden (41) weisenden und in Bezug auf den Boden (41) schrägen Strömungsrichtung (402) zugeführt wird,
**dadurch gekennzeichnet, dass**
auf der zu der Öffnung (12, 14) weisenden Seite des Fluidstromvorhangs (21, 23) eine Strömungswalze (407) aus wenigstens teilweise mit dem eingeblasenen Fluid vermischter Luft erzeugt wird, die sich von dem Boden (41) bis zu der Decke (6) in einer Eingangs- oder Ausgangsschleuse (11,13) erstreckt, wobei eine Leitkontur (211) bereitgestellt wird und das über die wenigstens eine Düse (17, 19) oder Blende (803) in den Innenraum (39) eingeblasene gasförmige Fluid an der Leitkontur (211) entlang in den Innenraum (39) geführt wird und wobei auf der zu der Öffnung (213, 1213) weisenden Seite der Leitkontur (211, 1211) eine Wandung (215, 1215) bereitgestellt wird, die mit der Leitkontur (211, 1211) eine Mischkammer (217, 1217) begrenzt, in der Fluid aus einer auf einer zu der Öffnung (12, 14) weisenden Seite des Fluidvorhangs (21, 23) ausgebildeten Strömungswalze (407, 1407) mit Luft aus dem Bereich der Öffnung (213, 1213) vermischt und von dem durch die Düse (17, 19, 1017) oder die Blende (803) strömenden, gasförmigen Fluid in den Innenraum (39, 1039) gesaugt wird.

11. Verfahren nach Anspruch 10, **dadurch gekennzeichnet, dass** das über die wenigstens eine Düse (17,19) oder Blende (803) in den Innenraum (39) eingeblasene gasförmige Fluid an der Leitkontur (211) geführt wird, ohne dass ein Strömungsabriss auftritt.

12. Verfahren nach Anspruch 10 oder 11, **dadurch gekennzeichnet, dass** die Leitkontur (606) für das Einstellen des Fluidstromvorhangs (21,23) verschwenkt wird.

13. Verfahren nach einem der Ansprüche 10 bis 12, **dadurch gekennzeichnet, dass** der Fluidstromvorhang (21, 23) zwischen der Öffnung (12, 14) und dem Aufnahmebereich (15) für Werkstücke (3) gedrosselt oder unterbrochen wird und/oder dass die Richtung des Fluidstromvorhangs (21, 23) geändert wird, wenn ein Werkstück (3) durch die Öffnung (12, 14) bewegt wird.

## Claims

1. Process chamber (5) with an interior space (39) which comprises a receiving region (15) for workpieces (3) that is designed in the form of a tunnel and has a floor (41) and a ceiling (6), with an opening (12, 14) for supplying or discharging workpieces (3) and with a device (17, 19, 25, 29, 33, 37, 35) for injecting gaseous fluid into the interior space (39), which has at least one slot-shaped nozzle (17, 19) or aperture (803) for producing a fluid flow curtain (21, 23) between the opening (12, 14) and the receiving space (15) for workpieces (3), wherein the slot-shaped nozzle (17, 19) or aperture (803) supplies the gaseous fluid into the interior space (39) by way of the ceiling (6) of the interior space (39) with an oblique direction of flow (402) with respect to the floor (41) along a directing contour (211)
**characterized in that**
the directing contour (211), with a wall (215) of an intake air lock (11) or exit air lock (13) that is arranged on a side of the directing contour (211) that is facing the opening (12, 14), bounds a mixing chamber (217), which is arranged set back upward with respect to the ceiling (6), above the opening (12, 14), and from which air coming from the region of the opening (12, 14) is entrained by the gaseous fluid supplied into the interior space (39) through the slot-shaped nozzle (17, 19) or the aperture (803) and is sucked into the interior space (39).

2. Process chamber according to Claim 1, **characterized in that** the directing contour (606) is formed on a pivotable directing vane (605).

3. Process chamber according to Claim 1 or 2,
**characterized in that** the wall (709, 809) has one or more openings (816) for the passing through of circulated air from the region of the opening (12).

4. Process chamber according to one of Claims 1 to 3,
**characterized in that** a secondary chamber (216) acting as a dead space for gaseous fluid is formed on a side of the directing contour (211) that is facing away from the mixing chamber (217).

5. Process chamber according to one of Claims 1 to 4,
**characterized in that** a directing vane (1218) is arranged in the mixing chamber (1217).

6. Process chamber according to one of Claims 1 to 5,
**characterized in that** the at least one nozzle (503) has a device (511) for setting the amount of flow of fluid passing through the nozzle (503) and/or **in that** multiple nozzles (903, 905, 907) with a device for setting the amount of flow of fluid passing through the nozzle are provided in order to set the fluid flow curtain between the intake opening and the receiving region for workpieces (912) differently in different sections.

7. Process chamber according to one of Claims 1 to 6,
**characterized in that** a pivotable flow barrier (1220) is provided for controlling a fluid flow formed in the interior space (1039).

8. Process chamber according to one of Claims 1 to 7,
**characterized in that** the device for injecting gaseous fluid has a heating device (43, 44) for heating the gaseous fluid.

9. Drying and/or hardening installation and/or painting installation with a process chamber (5) that is formed according to one of Claims 1 to 8.

10. Method for operating a process chamber (5) having an interior space (39) with a tunnel-shaped receiving region (15) for workpieces (3), with a floor (41), with a ceiling (6) and with an opening (12, 14) for supplying or discharging workpieces (3), and containing a device (17, 19, 25, 29, 33, 37, 35) for injecting gaseous fluid into the interior space (39), in which gaseous fluid is injected through at least one slot-shaped nozzle (17, 19) or aperture (803) by way of the ceiling (6), said fluid producing a fluid flow curtain (21, 23) between the opening (12, 14) and the receiving region (15) for workpieces (3), wherein the gaseous fluid is supplied into the interior space (39) with a direction of flow (402) that is away from the opening (12, 14), pointing toward the floor (41) and oblique with respect to the floor (41),
**characterized in that**
on the side of the fluid flow curtain (21, 23) that is facing the opening (12, 14), a flow vortex (407) is produced from air at least partially mixed with the injected fluid and extends from the floor (41) up to the ceiling (6) in an intake or exit air lock (11, 13), wherein a directing contour (211) is provided and the gaseous fluid injected into the interior space (39) by way of the at least one nozzle (17, 19) or aperture (803) is guided along the directing contour (211) into the interior space (39) and wherein on the side of the directing contour (211, 1211) that is facing the opening (213, 1213) there is provided a wall (215, 1215) which, with the directing contour (211, 1211), bounds a mixing chamber (217, 1217), in which fluid from a flow vortex (407, 1407) that is formed on a side of the fluid curtain (21, 23) that is facing the opening (12, 14) is mixed with air from the region of the opening (213, 1213) and from which gaseous fluid flowing through the nozzle (17, 19, 1017) or the aperture (803) is sucked into the interior space (39, 1039).

11. Method according to Claim 10, **characterized in that** the gaseous fluid injected into the interior space (39) by way of the at least one nozzle (17, 19) or aperture (803) is guided on the directing contour (211) without any flow separation occurring.

12. Method according to Claim 10 or 11, **characterized in that** the directing contour (606) is pivoted for setting the fluid flow curtain (21, 23).

13. Method according to one of Claims 10 to 12,
**characterized in that** the fluid flow curtain (21, 23) between the opening (12, 14) and the receiving region (15) for workpieces (3) is throttled or interrupted and/or **in that** the direction of the fluid flow curtain (21, 23) is changed when a workpiece (3) is moved through the opening (12, 14).

## Revendications

1. Chambre de traitement (5) comprenant un espace interne (39) qui comprend une région de réception (15) configurée en forme de tunnel pour des pièces (3), présentant un fond (41) et un plafond (6), comprenant une ouverture (12, 14) pour l'alimentation ou l'évacuation de pièces (3), et comprenant un dispositif (17, 19, 25, 29, 33, 35, 35) pour insuffler un fluide gazeux dans l'espace interne (39), qui présente au moins une buse en forme de fente (17, 19) ou un diaphragme (803) pour générer un rideau de courant de fluide (21, 23) entre l'ouverture (12, 14) et la région de réception (15) pour les pièces (3), la buse en forme de fente (17, 19) ou le diaphragme (803) acheminant le fluide gazeux par le biais du plafond (6) de l'espace interne (39) avec une direction d'écoulement (402) oblique par rapport au fond (41) le long d'un contour de guidage (211) dans l'espace interne (39),
**caractérisée en ce que**
le contour de guidage (211), avec une paroi (215) d'un sas d'entrée (11) ou d'un sas de sortie (13) disposée sur un côté du contour de guidage (211) tourné vers l'ouverture (12, 14), délimite une chambre de mélange (217) disposée en retrait vers le haut par rapport au plafond (6) au-dessus de l'ouverture (12, 14), hors de laquelle de l'air provenant de la région de l'ouverture (12, 14) est entraîné par le fluide gazeux acheminé dans l'espace interne (39) par la buse (17, 19) en forme de fente ou par le diaphragme (803) et est aspiré dans l'espace interne (39).

2. Chambre de traitement selon la revendication 1,
**caractérisée en ce que** le contour de guidage (606) est réalisé au niveau d'une ailette de guidage pivotante (605).

3. Chambre de traitement selon la revendication 1 ou 2, **caractérisée en ce que** la paroi (709, 809) présente une ou plusieurs ouvertures (816) pour le passage d'air en circulation provenant de la région de l'ouverture (12).

4. Chambre de traitement selon l'une quelconque des revendications 1 à 3, **caractérisée en ce qu'**une chambre auxiliaire (216) agissant en tant qu'espace mort pour du fluide gazeux est réalisée sur un côté du contour de guidage (211) opposé à la chambre de mélange (217).

5. Chambre de traitement selon l'une quelconque des revendications 1 à 4, **caractérisée en ce qu'**une ailette de guidage (1218) est disposée dans la chambre de mélange (1217).

6. Chambre de traitement selon l'une quelconque des revendications 1 à 5, **caractérisée en ce que** l'au moins une buse (503) présente un dispositif (511) pour l'ajustement de la quantité d'écoulement pour du fluide traversant la buse (503) et/ou **en ce que** plusieurs buses (903, 905, 907) sont pourvues d'un dispositif pour l'ajustement de la quantité d'écoulement pour du fluide traversant la buse, afin d'ajuster différemment le rideau de courant de fluide entre l'ouverture d'entrée et la région de réception de pièces (912) dans différentes portions.

7. Chambre de traitement selon l'une quelconque des revendications 1 à 6, **caractérisée en ce qu'**une barrière à l'écoulement pivotante (1220) est prévue pour commander un écoulement de fluide réalisé dans l'espace interne (1039).

8. Chambre de traitement selon l'une quelconque des revendications 1 à 7, **caractérisée en ce que** le dispositif pour insuffler du fluide gazeux présente un dispositif de chauffage (43, 44) pour chauffer le fluide gazeux.

9. Installation de séchage et/ou de durcissement et/ou installation de peinture comprenant une chambre de traitement (5) réalisée selon l'une quelconque des revendications 1 à 8.

10. Procédé pour faire fonctionner une chambre de traitement (5) qui présente un espace interne (39) avec une région de réception en forme de tunnel (15) pour des pièces (3), avec un fond (41), avec un plafond (6) et avec une ouverture (12, 14) pour l'alimentation ou l'évacuation de pièces (3), et qui contient un dispositif (17, 19, 25, 29, 33, 37, 35) pour insuffler du fluide gazeux dans l'espace interne (39), dans lequel du fluide gazeux est insufflé à travers au moins une buse en forme de fente (17, 19) ou un diaphragme (803) par le biais du plafond (6), lequel fluide génère un rideau de courant de fluide (21, 23) disposé entre l'ouverture (12, 14) et la région de réception (15) pour les pièces (3), le fluide gazeux étant acheminé dans l'espace interne (39) avec un dispositif d'écoulement (402) opposé à l'ouverture (12, 14), tourné vers le fond (41) et oblique par rapport au fond (41),
**caractérisé en ce que**
du côté du rideau de courant de fluide (21, 23) tourné vers l'ouverture (12, 14) est généré un rouleau d'écoulement (407) constitué au moins en partie d'air mélangé au fluide insufflé, qui s'étend depuis le fond (41) jusqu'au plafond (6) dans un sas d'entrée ou un sas de sortie (11, 13), un contour de guidage (211) étant fourni et le fluide gazeux insufflé par le biais de l'au moins une buse (17, 19) ou du diaphragme (803) dans l'espace interne (39) étant guidé le long du contour de guidage (211) dans l'espace interne (39) et une paroi (215, 1215) étant fournie du côté du contour de guidage (211, 1211) tourné vers l'ouverture (213, 1213), laquelle délimite une chambre de mélange (217, 1217) avec le contour de guidage (211, 1211), dans laquelle du fluide provenant d'un rouleau d'écoulement (407, 1407) réalisé sur un côté du rideau de fluide (21, 23) tourné vers l'ouverture (12, 14) est mélangé avec l'air provenant de la région d'ouverture (213, 1213) et est aspiré dans l'espace interne (39, 1039) par le fluide gazeux s'écoulant à travers la buse (17, 19, 1017) ou le diaphragme (803).

11. Procédé selon la revendication 10, **caractérisé en ce que** le fluide gazeux insufflé par le biais de l'au moins une buse (17, 19) ou du diaphragme (803) dans l'espace interne (39) est guidé au niveau du contour de guidage (211) sans qu'il ne se produise un décrochement de l'écoulement.

12. Procédé selon la revendication 10 ou 11, **caractérisé en ce que** le contour de guidage (606) est pivoté pour ajuster le rideau de courant de fluide (21, 23).

13. Procédé selon l'une quelconque des revendications 10 à 12, **caractérisé en ce que** le rideau de courant de fluide (21, 23) est étranglé ou interrompu entre l'ouverture (12, 14) et la région de réception (15) pour des pièces (3) et/ou **en ce que** la direction du rideau de courant de fluide (21, 23) est modifiée lorsqu'une pièce (3) est déplacée à travers l'ouverture (12, 14).
